## Europäisches Patentamt

(19) European Patent Office

Office européen des brevets

(11) Veröffentlichungsnummer : **0 418 572 B1**

(12) **EUROPÄISCHE PATENTSCHRIFT**

(45) Veröffentlichungstag der Patentschrift :
**25.11.92 Patentblatt 92/48**

(51) Int. Cl.5 : **E02D 31/00**, E21B 43/38,
E21B 43/40, B01D 19/00,
C02F 9/00

(21) Anmeldenummer : **90115958.2**

(22) Anmeldetag : **21.08.90**

(54) Anordnung zum Austreiben leichtflüchtiger Verunreinigungen aus dem Grundwasser.

(30) Priorität : **16.09.89 DE 3931013**
**16.01.90 DE 4001011**

(43) Veröffentlichungstag der Anmeldung :
**27.03.91 Patentblatt 91/13**

(45) Bekanntmachung des Hinweises auf die
Patenterteilung :
**25.11.92 Patentblatt 92/48**

(84) Benannte Vertragsstaaten :
**AT CH DE ES FR GB IT LI NL SE**

(56) Entgegenhaltungen :
**DE-C- 3 811 962**
**GB-A- 2 159 727**

(56) Entgegenhaltungen :
**PATENT ABSTRACTS OF JAPAN vol. 11, no.
48 (M-561)(2495) 13 Februar 1987, & JP-A-61
211415 (TAKENAKA KOMUTEN) 19 September1986**

(73) Patentinhaber : **IEG Industrie-Engineering
GmbH
Lilienthalstrasse 6
W-7410 Reutlingen 11-Betzingen (DE)**

(72) Erfinder : **Bernhardt, Bruno
Burgstrasse 85
W-7410 Reutlingen (DE)**

(74) Vertreter : **Möbus, Rudolf, Dipl.-Ing.
Hindenburgstrasse 65
W-7410 Reutlingen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Anordnung zum Austreiben leichtflüchtiger Verunreinigungen aus dem Grundwasser und dem von ihm durchströmten Erdreich durch Erzeugen von Unterdruck in einem bis in den Bereich des verunreinigten Grundwassers getriebenen Brunnenschacht und durch Zuleitung eines Gases, insbesondere von Frischluft, in eine durch einen unterhalb des Wasserspiegels im Brunnenschacht angeordneten Düsenkörper begrenzte Luftkammer mit separaten, durch eine Trennwandung gegeneinander abgedichteten Brunnenschachtbereichen mit wasserdurchlässiger Schachtwandung zur Wasseransaugung aus dem Erdreich und zur Wiedereinleitung des Wassers in das Erdreich, wobei durch die Trennwandung ein Rohr geführt ist.

Eine solche Reinigungsanordnung ist bereits aus der DE-PS 38 11 962 bekannt, wobei die Aufgabe jener Erfindung in der Begünstigung einer Grundwasser-Vertikalströmung im Brunnenschacht besteht.

Der vorliegenden Erfindung liegt nun die Aufgabe zugrunde, eine solche Anordnung zur Grundwasserreinigung so auszubilden, daß eine regulierbare Vertikalströmung des Grundwassers erzielbar ist.

Die gestellte Aufgabe wird mit einer Anordnung der eingangs genannten Art erfindungsgemäß dadurch gelöst, daß im Wasseransaugbereich des Schachtes eine Saugpumpe angeordnet ist, deren Ausgang über ein Rohr mit einem unterhalb des Düsenkörpers angeordneten, abgeschlossenen Wasseraufnahmeraum verbunden ist.

Diese zusätzliche Pumpe im Schacht verstärkt die Ansaugwirkung des durch eine außerhalb des Schachtes angeordnete Pumpe erzeugten Unterdrucks im Schacht. Es können dadurch weitere Wassermengen zunächst in einen Wasseraufnahmeraum unterhalb des Düsenkörpers und anschließend durch dessen Öffnungen in den eigentlichen Reinigungsbereich oberhalb des Düsenkörpers geleitet werden. Dabei erhöht sich der Wasserspiegel im Brunnenschacht. Der durch die höhere Wassersäule bewirkte Druckanstieg begünstigt die Vertikalströmung des gereinigten Wassers im Schacht von oben nach unten und erleichtert damit das Wiedereinleiten des Wassers in das Erdreich. Dies ist besonders bei dichten Bodenschichten von Vorteil. Die Saugleistung der Pumpe kann dabei über eine mit der Pumpe verbundene Steuereinheit kontrolliert und reguliert werden. Die Anlage ist dadurch leicht an verschiedene Bodengegebenheiten und unterschiedliche Schachtdurchmesser anpaßbar.

Durch die Anordnung des Ansaug- und Wiedereinleitbereiches in einem gemeinsamen Brunnenschacht, wobei diese Bereiche durch eine Trennwandung voneinander abgeteilt sind, ist die Erzeugung eines Wasserkreislaufes zwischen dem Erdreich und der Reinigungsanlage im Brunnenschacht möglich.

Das Wasser gelangt dabei über die Ansaugstelle in den Schacht und verläßt diesen nach der Reinigung wieder über die in einer anderen Tiefe als die Ansaugstelle im Schacht angeordnete Wiedereinleitstelle. Ansaugen und Wiedereinleiten erfolgen also in unterschiedlichen Bodenschichten. Es entsteht dadurch nicht nur eine Vertikalströmung des Wassers im Schacht sondern auch im Erdreich um den Brunnenschacht. Diese verhindert ein horizontales Ausbreiten der Kontaminationsstoffe durch das wieder ausgepreßte gereinigte Grundwasser. Bei Anordnung des Ansaugbereiches über dem Wiedereinleitbereich im Brunnenschacht kann dabei ein Wasserkreislauf durch den Schacht und das Erdreich gegen den Uhrzeigersinn und im umgekehrten Falle ein Wasserkreislauf im Uhrzeigersinn erzielt werden. Der Ansaug- und der Wiedereinleitbereich des Schachtes können in deutlich unterschiedlichen Tiefen des Schachtes angeordnet sein. Dabei kann vorteilhafterweise zwischen den beiden Bereichen ein durch Trennwandungen abgedichteter wasserfreier Raum geschaffen werden. Dieser Raum ist beliebig ausdehnbar, so daß mit der Reinigungsanordnung Bodenschichten in unterschiedlicher Tiefe erreichbar sind. Zweckmäßigerweise ist zwischen Ansaug- und Wiedereinleitbereich des Schachtes außen um die Schachtwandung eine Dichtungsmanschette angeordnet, um zu verhindern, daß das wieder in das Erdreich eingeleitete gereinigte Grundwasser entlang der Schachtwandung direkt, ohne in das Erdreich gelangen zur Ansaugstelle fließt.

Die vertikale Führung des Grundwassers im Brunnenschacht kann noch dadurch erhöht werden, daß der Wasseraufnahmeraum für die Saugpumpe, der Düsenkörper und der über ihm angeordnete eigentliche Reinigungsbereich in einer topfartigen Erweiterung des Verbindungsrohres zwischen Ansaug- und Wiedereinleitbereich im Schacht angeordnet sind, wobei der Raum zwischen den konzentrischen Wandungen der topfartigen Rohrerweiterung und des Schachtes als Führung des nach unten aus dem Reinigungsbereich zur Wiedereinleitstelle abfließenden Grundwassers dient. Bei Reinigungsanlagen mit einem Ansaugbereich oberhalb des Wiedereinleitbereiches kann zweckmäßigerweise auch die Saugpumpe selbst in dieser topfartigen Erweiterung des Verbindungsrohres angeordnet sein.

Durch die Begünstigung der Vertikalströmung sowohl im Brunnenschacht als auch im umgebenden Erdreich, wobei die Särke dieser Strömung regulierbar ist, ist die Anlage insbesondere zur Reinigung von dichten oder nur sehr dünnen grundwasserführenden Bodenschichten besonders vorteilhaft.

Die Reinigungswirkung der Anordnung und ihre Wirtschaftlichkeit können zusätzlich dadurch gesteigert werden, daß Vorrichtungen zum Absaugen des Reinigungsgases oder Gasgemisches und den Absaugvorrichtungen nachgeschaltete Filtereinrichtungen anordenbar sind, wobei die Filtereinrichtung mindestens eine Verbindung zum Zuleitungskanal für die Reinigungsgase oder Gasgemische zur mindestens teilweisen Rückführung der Gase in den Brunnenschacht aufweist.

Das zumindest teilweise Rückführen der gefilterten Gase in den Brunnenschacht ermöglicht eine häufige Wiederverwendung der Gase zur Reinigung des kontaminierten Grundwassers. Dadurch wird das ständige Zuführen frischer und unter Umständen teurer Spezialgase zur Reinigung überflüssig. Bei der Verwendung von Luft zur Reinigung, die an sich einfach und preiswert von oberhalb der Erdoberfläche angesaugt werden kann, bietet das Rückführen der gefilterten Abluft den Vorteil, daß unerwünschte Oxidationsvorgänge in den grundwasserführenden Bodenschichten vermindert werden können.

Die Filtereinrichtung zur Reinigung der Abluft bzw. der kontaminierten Reinigungsgase kann vorteilhafterweise mehrstufig ausgebildet sein, wobei die erste Filterstufe der Grobfilterung und die weiteren Stufen der Feinfilterung der Gase oder Gasgemische dienen. Die mit dieser mehrstufigen Anordnung erzielbare Filterwirkung ist wesentlich größer als bei einer einstufigen Ausführung. Die Anordnung einer Verbindung zum Zuleitungskanal der Reinigungsgase in den Schacht bereits nach der ersten Filterstufe, wobei der Anteil des über diese Verbindung rückgeführten Gases über eine Drosselklappe einstellbar ist, ermöglicht es, bei nur schwacher Verschmutzung des Grundwassers eine unnötige Feinfilterung des Reinigungsgases durch die nachfolgenden Stufen zu vermeiden. Der Filteraufwand ist also dem Verschmutzungsgrad anpaßbar, wodurch sowohl der Zeit- als auch der Kostenaufwand für die Filterung der Abluft oder der Abgase steuerbar ist.

Zur Feinfilterung kann eine der ersten Stufe nachgeschaltete Filterstufe einen Kältereaktor zum Ausfrieren von Verunreinigungen aufweisen, wobei das Ausfrieren von Verunreinigungen ein kostengünstiges und sehr effizientes Filterverfahren ist.

Nachfolgend werden zwei Ausführungsbeispiele einer erfindungsgemäßen Anordnung anhand der Zeichnungen näher erläutert.

Im einzelnen zeigen:

Fig. 1 einen schematischen Längsschnitt durch eine erste Ausführungsform der Anordnung;

Fig. 2 einen schematischen Längsschnitt durch eine zweite Ausführungsform der Anordnung.

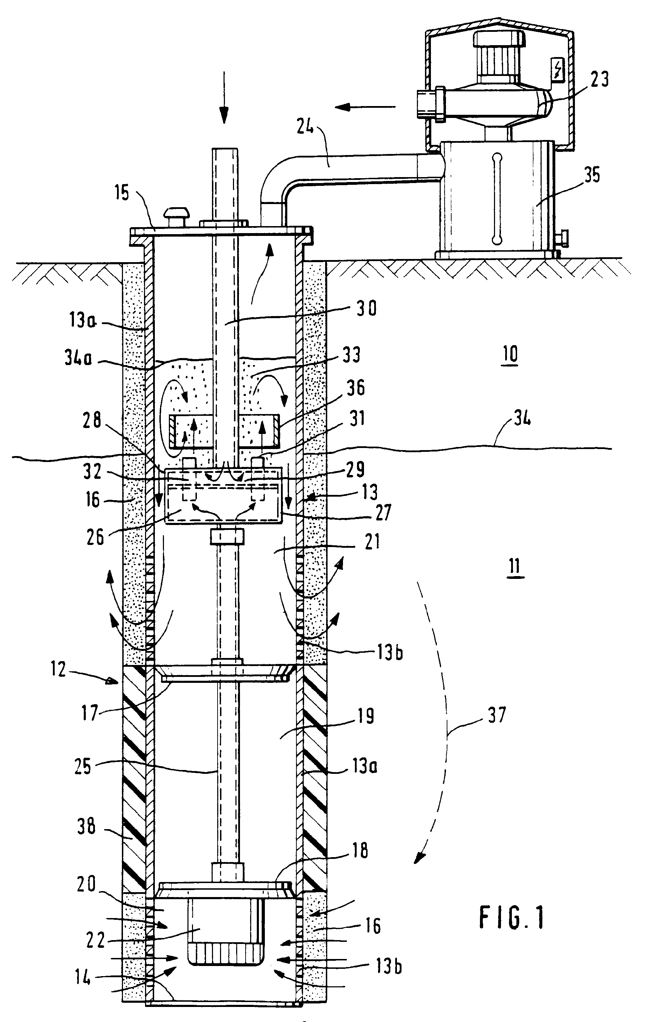

Fig. 1 zeigt einen in das Erdreich 10 bis in einen Bereich 11 mit kontaminiertem Grundwasser eingebrachten Brunnenschacht 12. In dem Brunnenschacht 12 ist ein Brunnenrohr 13 mit wasserundurchlässigen Wandungsbereichen 13a und wasserdurchlässigen Wandungsbereichen 13b eingebracht. Das Brunnenrohr 13 ist durch einen Boden 14 und durch einen Deckel 15 verschlossen. Der Hohlraum zwischen Brunnenrohr 13 und Brunnenschacht 12 ist mit Filterkies 16 aufgefüllt. Das Innere des Brunnenrohres 13 ist durch zwei Trennwandungen 17 und 18 unterteilt, die einen wasserfreien Raum 19 einschließen, der einen Wasseransaugbereich 20 des Schachtes mit durchbrochener Wandung 13b von einem Wiedereinleitbereich 21 des Schachtes mit ebenfalls wasserdurchlässigen Wandungen 13b trennt. Im Ansaugbereich 20 ist eine Saugpumpe 22 angeordnet, die die Saugwirkung einer oberhalb der Erdoberfläche angebrachten, über ein Ansaugrohr 24 mit dem Brunnenschacht 12 verbundenen Pumpe 23 und damit den erzeugten Unterdruck im Brunnenschacht 12 verstärkt. Das von der Pumpe 22 angesaugte Wasser wird über ein Verbindungsrohr 25 durch den wasserfreien Schachtbereich 19 und den Wiedereinleitbereich 21 in einen Wasseraufnahmeraum 26 geleitet, der von unten durch ein topfartiges Gehäuse 27 und von oben durch einen Düsenkörper 28 abgeschlossen ist. Der Düsenkörper 28 ist ebenfalls von topfförmiger Gestalt und begrenzt einen Luftaufnahmeraum 29, in den, bedingt durch den im Schacht herrschenden Unterdruck, Luft von außen durch ein Luftzufuhrrohr 30 eingeleitet wird. Der Düsenkörper 28 weist in seiner oberen Begrenzungsplatte feine Öffnungen 31 sowie Wasserdurchlaßschächte 32 auf. Durch die feinen Öffnungen 31 steigt die im Luftaufnahmeraum 29 gesammelte Luft in feinen Bläschen nach oben in einen eigentlichen Reinigungsbereich 33 des Schachtes auf. Die Wasserdurchlaßschächte 32 dienen der Zuleitung des angesaugten Grundwassers aus dem Wasseraufnahmeraum 26 in den Reinigungsbereich 33, wo es von den Luftbläschen durchströmt wird, die dabei in der Lage sind, Kontaminationen im Wasser an sich zu binden und aus dem Wasser herauszubefördern. Oberhalb des mit 34a bezeichneten Wasserspiegels im Brunnenschacht 12 werden die Luft und die Kontaminationsstoffe anschließend über das Absaugrohr 24 durch die Pumpe 23 abgesaugt und über einen Kondensatabscheider 35 geführt, bevor sie wieder ins Freie abgegeben wird.

Durch die Wirkung der beiden Pumpen 22 und 23 wird der Wasserspiegel im Brunnenschacht auf ein Niveau 34a gegenüber dem Niveau 34 im umgebenden Erdreich 10 angehoben. Der durch diese Anhebung verursachte Wasserdruck bewirkt eine Vertikalströmung des gereinigten Grundwassers aus dem Reinigungsbereich 33 nach unten zum Wiedereinleitbereich 21 des Brunnenschachtes 12. Ein konzentrisch zum Luftzufuhrrohr 30 angeordneter Leitring 36 unterstützt dabei die Führung der Vertikalströmung durch den innen vom Leitring 36, dem Düsenkörper 28, dem Gehäuse 27 des Wasseraufnahmeraumes 26 und außen durch die Rohrwandung 13a begrenzten Raum. Anschließend wird das gereinigte Grundwasser durch die perforierte Rohrwandung 13b in die Grundwasserschicht 11 abgegeben.

Durch die räumlich weit voneinander getrennte Anordnung des Ansaugbereiches 20 und des Wiedereinleitbereiches 21 ist eine Vertikalströmung außerhalb des Schachtes hier nur schwach ausgebildet, was durch den gestrichelten Pfeil 37 angedeutet ist. Eine Ausbreitung der Kontaminationen in weiter vom Brunnenschacht entfernte Bereiche ist hier jedoch auch bei nur schwacher Vertikalströmung nicht zu befürchten, da das gereinigte Grundwasser in einen sehr viel höher als die kontaminierte Bodenschicht liegenden Bereich des Erdreichs wieder abgegeben wird. Das Abfließen des gereinigten Grundwassers entlang der Schachtwandung wird durch eine Dichtungsmanschette 38 um das Brunnenrohr 13 im Bereich des wasserfreien Raumes 19 verhindert.

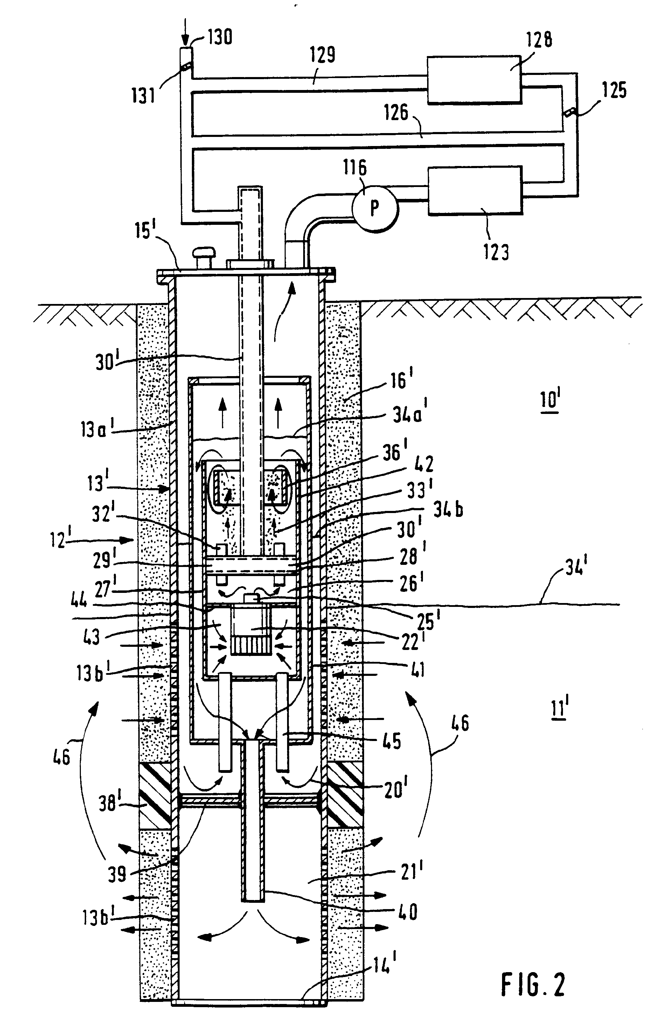

Das in Fig. 2 dargestellte Ausführungsbeispiel der Erfindung weist im wesentlichen die gleiche Reinigungsanordnung wie beim Ausführungsbeispiel nach Fig. 1 auf. Gleiche Teile sind daher mit den gleichen Bezugsziffern, ergänzt durch einen Beistrich, bezeichnet. Die Reinigungsvorrichtung besteht aus einem Düsenkörper 28′ mit einer Luftkammer 29′, einem Luft- oder Gaszufuhrrohr 30′ sowie einem konzentrisch zum Zufuhrrohr 30′ angeordneten Leitring 36′. Im Unterschied zu Fig. 1 ist bei der Anordnung nach Fig. 2 jedoch der Wasseransaugbereich 20′ des Schachtes oberhalb des Wiedereinleitbereiches 21′ des Schachtes ausgebildet. Beide Bereiche sind hier lediglich durch eine Trennwandung 39, durch die ein Rohr 40 geführt ist, ohne wasserfreien Raum gegeneinander abgedichtet. In einer topfartigen Erweiterung 41 des Rohres 40 sind, umschlossen von einem inneren Topf 42, die Reinigungsanordnung mit dem Düsenkörper 28′, die Luftaufnahmekammer 29′, der Reinigungsbereich 33′ und der Leitring 36′ sowie eine in Fig. 1 dargestellte entsprechende Ansaugpumpe 22′ angeordnet. Die Pumpe 22′ befindet sich dabei in einem unteren Bereich 43 des inneren Topfes 42, der durch eine Trennwand 44 von einem unterhalb der Düsenplatte angeordneten Wasseraufnahmeraum 26′ abgeteilt ist. Der Pumpenraum 43 ist über Rohre 45 mit dem Ansaugbereich 20′ des Schachtes verbunden.

Die Unterdruckerzeugung im Schacht 12′ durch eine außerhalb des Schachtes angeordnete Pumpe 116 bewirkt ein Anheben des Wasserspiegels im Brunnenrohr außerhalb der topfartigen Erweiterung 41 auf das Niveau 34b. In der topfartigen Erweiterung 41 selbst wird der Wasserspiegel durch die Wirkung der Pumpe 22′ noch weiter auf das Niveau 34a′ angehoben. Das Wasser gelangt dabei aus dem Ansaugbereich 20′ durch die Rohre 45 in den Pumpenraum 43 und anschließend durch ein Rohrstück 25′ in den Wasseraufnahmeraum 26′. Von dort wird es über Wasserdurchlaßschächte 32′ im Düsenkörper 28′ in den eigentlichen Reinigungsbereich 33′ geleitet. Durch die Anhöhung des Wasserspiegels 34a′ und den dadurch erzeugten Druck wird anschließend eine Vertikalströmung des gereinigten Wassers im Raum zwischen den Wandungen des Innentopfes 42 und der topfartigen Erweiterung 41 von oben nach unten begünstigt. Am unteren Ende der topfartigen Erweiterung 41 gelangt das gereinigte Grundwasser über das Rohr 40 in den Wiedereinleitbereich des Schachtes 21′ und von dort aus in das Erdreich. Im Erdreich entsteht, bedingt durch den Druckunterschied am Brunnenschacht zwischen Wiedereinleitbereich 21′ und Ansaugbereich 20′, eine Vertikalströmung des Wassers von unten nach oben. Diese Vertikalströmung im Erdreich ist durch die Pfeile 46 angedeutet. Sie verhindert eine Ausbreitung der Kontaminationen im Grundwasserbereich 11′ durch das wieder eingepreßte gereinigte Wasser. Insgesamt entsteht wegen der Anordnung des Ansaugbereiches 20′ oberhalb des Wiedereinleitbereiches 21′ durch die Reinigungsanordnung ein Wasserkreislauf zwischen Brunnenschacht und Erdreich gegen den Uhrzeigersinn.

Außer der Pumpe 116 zur Erzeugung von Unterdruck im Schacht 12′ und zur Einleitung von Luft und-/oder Reinigungsgasen über das Zufuhrrohr 30′ sind bei der Anordnung nach Fig. 2 zusätzliche Filter- und Aufbereitungseinrichtungen für die Luft und/oder das Gas oberhalb der Erdoberfläche vorgesehen. Nach der Pumpe 116 ist eine erste Filterstufe 123 angeordnet, die eine Grobreinigung der Abluft oder Abgase durchführt. Nach Durchlaufen der ersten Filterstufe 123 können die Reinigungsgase, gesteuert durch eine Luftdrossel 125, teilweise über eine Verbindung 126 in das Gaszufuhrrohr 30′ zurückströmen. Der andere Teil der Reinigungsgase durchläuft eine zweite Reinigungsstufe 128 zur Feinfilterung, bevor er über eine Verbindung 129 ebenfalls dem Gaszufuhrrohr 30′ zugeführt wird. Eine Eintrittsöffnung 130 im Zufuhrrohr 30′ dient der durch eine Luftdrossel 131 gesteuerten Zuleitung frischer Luft oder frischer Reinigungsgase.

Anstelle der hier dargestellten zweistufigen Filtereinrichtung sind natürlich auch mehrstufige Filtereinrichtungen denkbar, wobei mindestens eine der Stufen mit Spezialeinrichtungen, wie beispielsweise einem Kältereaktor, versehen sein kann.

Die Pumpen 22, 22′, 23 und 116 sind in den Anordnungen der Fig. 1 und 2 jeweils mit einer nicht dargestellten Steuereinheit verbunden und dadurch in ihren Leistungen steuerbar.

## Patentansprüche

1. Anordnung zum Austreiben leichtflüchtiger Verunreinigungen aus dem Grundwasser (34, 34′) und dem von ihm durchströmten Erdreich (10, 10′) durch Erzeugen von Unterdruck in einem bis in den Bereich des verunreinigten Grundwassers getriebenen Brunnenschacht (12, 12′) und durch Zuleitung eines Gases, insbesondere von Frischluft, in eine durch einen unterhalb des Wasserspiegels im Brunnenschacht angeordneten Düsenkörper (28, 28') begrenzte Luftkammer (29, 29'), mit separaten, durch eine Trennwandung (17, 18) gegeneinander abgedichteten Brunnenschachtbereichen (20, 21) mit wasserdurchlässiger Schachtwandung (13b, 13b') zur Wasseransaugung aus dem Erdreich und zur Wiedereinleitung des Wassers in das Erdreich, wobei durch die Trennwandung ein Rohr geführt ist, dadurch gekennzeichnet, daß im Wasseransaugbereich (20, 20') des Schachtes (12, 12') eine Saugpumpe (22, 22') angeordnet ist, deren Ausgang über ein Rohr (25, 25') mit einem unterhalb des Düsenkörpers (28, 28') angeordneten, abgeschlossenen Wasseraufnahmeraum (26, 26') verbunden ist.

2. Anordnung nach Anspruch 1, dadurch gekennzeichnet, daß die Saugpumpe (22, 22') mit einer außerhalb des Schachtes (12, 12') angeordneten Steuereinheit zur Regulierung ihrer Pumpleistung verbunden ist.

3. Anordnung nach Anspruch 1 oder 2, dadurch gekennzeichnet, daß der Wasseransaugbereich (20, 20') unter- oder oberhalb des Bereiches (21, 21') zur Wasserwiedereinleitung im Schacht (12, 12') angeordnet ist.

4. Anordnung nach einem der Ansprüche 1 bis 3, dadurch gekennzeichnet, daß der Wasseransaugbereich (20) und der Bereich (21) zur Wiedereinleitung des Grundwassers durch einen wasserfreien Schachtbereich (19), der durch Trennwandungen (17, 18) abgedichtet ist, getrennt sind und das Verbindungsrohr (25) zwischen dem Wasseransaug- und dem Wiedereinleitbereich (20, 21) durch diesen wasserfreien Schachtbereich (19) und die beiden Trennwandungen (17, 18) hindurchgeführt ist.

5. Anordnung nach einem der Ansprüche 1 bis 4, dadurch gekennzeichnet, daß im Bereich einer Trennwandung (39) oder des wasserfreien Schachtbereiches (19) zwischen Wasseransaug- und Wiedereinleitbereich (20, 21; 20', 21') die Schachtwandung (13, 13') außen von einer Dichtungsmanschette (38, 38') umschlossen ist.

6. Anordnung nach einem der Ansprüche 1 bis 5, dadurch gekennzeichnet, daß der Wasseraufnahmeraum (26') für die Saugpumpe (22'), der Düsenkörper (28') und der über diesem angeordnete Reinigungsbereich (33') in einer topfartigen Erweiterung (41) eines Verbindungsrohres (40) zwischen Wasseransaug- und Wiedereinleitbereich (20', 21') im Schacht (12') angeordnet sind.

7. Anordnung nach Anspruch 6, dadurch gekennzeichnet, daß bei Anordnung des Wasseransaugbereiches (20') oberhalb des Wiedereinleitbereiches (21') in Schacht (12') zusätzlich die Saugpumpe (22') in der topfartigen Erweiterung (41) des Verbindungsrohres (40) angeordnet ist.

8. Anordnung nach einem der Ansprüche 1 bis 7, gekennzeichnet durch an sich bekannte Vorrichtungen zum Absaugen des Reinigungsgases oder Gasgemisches und mit den Absaugvorrichtungen nachgeschalteten Filtereinrichtungen, wobei die Filtereinrichtung (123, 128) mindestens eine Verbindung (126, 129) zum Gaszufuhrrohr (30') für die Reinigungsgase oder Gasgemische zur mindestens teilweisen Rückführung der Gase in den Brunnenschacht (10) aufweist.

9. Anordnung nach Anspruch 8, dadurch gekennzeichnet, daß die Filtereinrichtung (123, 128) mindestens zweistufig ausgebildet ist und daß mindestens nach der ersten dieser Stufen (123) vor einer Drosselklappe (125) eine Verbindung (126) zum Gaszufuhrrohr (30') der Reinigungsgase oder Gasgemische in den Brunnenschacht (10) ausgebildet ist.

10. Anordnung nach Anspruch 8 oder 9, dadurch gekennzeichnet, daß die erste Filterstufe (123) Einrichtungen für eine Grobfilterung und die mindestens eine weitere Stufe Einrichtungen für eine Feinfilterung der abgesaugten Reinigungsgase und Gasgemische aufweisen.

11. Anordnung nach einem der Ansprüche 8 bis 10, dadurch gekennzeichnet, daß eine der ersten Stufe (123) nachgeschaltete Filterstufe (128) einen Kältereaktor zum Ausfrieren von Kontaminationsstoffen aufweist.

12. Anordnung nach einem der Ansprüche 8 bis 11, dadurch gekennzeichnet, daß das Reinigungsgasgemisch aus Luft mit oder ohne Zusatz von Trägergasen besteht.

**Claims**

1. Arrangement for the expulsion of light volatile pollutants from groundwater (34, 34') and the soil (10 10') it flows through by producing a negative pressure in a wellshaft which is driven into the area of polluted groundwater, and feeding a gas, in particular fresh air, into an air chamber (29, 29'), which is defined by a nozzle body (28, 28') arranged below water level in the wellshaft and which has separate wellshaft areas (20, 21), which are separated from each other by a separating wall (17, 18) with water permeable shaft wall (13b, 13b') for syphoning in water from the soil and for re-introducing the water into the soil, in which respect a pipe passes through the separating wall, **characterised in that** in the water-intake area (2Ø, 2Ø') of the shaft (12, 12') is arranged a vacuum pump (22, 22'), the outlet of which is connected via a pipe (25, 25') to a closed water receptacle (26, 26') arranged underneath the nozzle body (28, 28').

2. Arrangement according to claim 1, **characterised in that** the vacuum pump (22, 22') is connected to a control unit, which is arranged outside the shaft (12, 12'), for regulating its pump output.

3. Arrangement according to claim 1 or 2, **characterised in that** the water-intake area (2Ø, 2Ø') is arranged underneath or above the area (21, 21') for the re-introduction of water into the shaft (12, 12').

4. Arrangement according to one of claims 1 to 3, **characterised in that** the water-intake area (2Ø) and the area (21) for the re-introduction of groundwater are separated by a water-free shaft area (19) which is sealed by partitioning walls (17, 18), and that the connecting pipe (25) is passed through between the water-intake and the re-introduction area (2Ø, 21) and the two partitioning walls (17, 18).

5. Arrangement according to one of claims 1 to 4, **characterised in that** in the area of a partitioning wall (39) or the water-free shaft area (19) between water-intake and re-introduction area (2Ø, 21; 2Ø', 21') the shaft wall (13, 13') is externally enclosed by a sealing collar (38, 38').

6. Arrangement according to one of claims 1 to 5, **characterised in that** the water receptacle (26') for the vacuum pump (22'), the nozzle body (28') and a thereabove arranged cleansing area (33') are arranged in a pot-like extension (41) of a connecting pipe (4Ø) between water-intake and re-introduction area (2Ø', 21') in the shaft (12').

7. Arrangement according to claim 6, **characterised in that** when the water-intake area (2Ø') is placed above the re-introduction area (21') in the shaft (12'), a vacuum pump (22') is additionally arranged in the pot-like extension (41) of the connecting pipe (4Ø).

8. Arrangement according to one of claims 1 to 7, **characterised** by previously known devices for extracting cleansing gases or gas mixtures, and filtering devices downstream of the extracting means, whereby the filtering device (123, 128) comprises at least one connection (126, 129) to the gas-supply pipe (3Ø') for the cleansing gases or gas mixtures for at least partial feedback of gases into the wellshaft (1Ø).

9. Arrangement according to claim 8, **characterised in that** the filtering device (123, 128) is arranged in at least two stages, and that a connection (126) to the gas supply pipe (3Ø') of the cleansing gases or gas mixtures is arranged in the wellshaft (1Ø) at least after the first of these stages (123) in front of a throttle flap (125).

10. Arrangement according to claim 8 or 9, **characterised in that** a first filtering stage (123) comprises devices for coarse filtering, and the at least one further stage comprises devices for fine filtering of the expelled cleansing gases or gas mixtures.

11. Arrangement according to one of the claims 8 to 1Ø, **characterised in that** a filtering stage (128) following the first filtering stage (123) comprises a cold-reaction-device for freezing out contaminations.

12. Arrangement according to one of the claims 8 to 11, **characterised in that** the cleansing gas mixture consists of air with or without an addition of carrier gases.

## Revendications

1. Dispositif pour chasser des polluants volatiles légers de la nappe souterraine (34, 34') et de la terre (10, 10') traversée par celle-ci par génération d'une dépression dans un puits (12, 12') entraîné jusque dans la zone de l'eau souterraine polluée et par la conduite d'un gaz, en particulier d'air frais, dans une chambre d'air (29, 29'), délimitée par un corps à buses (28, 28') disposé au-dessous du niveau de l'eau dans le puits, avec des zones de puits (20, 21), séparées, étanches les unes par rapport aux autres par une paroi de séparation (17, 18), ayant une paroi de puits (13b, 13b') perméable à l'eau pour aspirer de l'eau hors de la terre et pour réintroduire de l'eau dans la terre, un tube étant conduit à travers la paroi de séparation, caractérisé en ce qu'une pompe aspirante (22, 22') est disposée dans la zone d'aspiration d'eau (20, 20') du puits (12, 12'), dont la sortie est reliée par l'intermédiaire d'un tube (25, 25') à un espace fermé de réception d'eau (26, 26'), disposé au-dessous du corps à buses (28, 28').

2. Dispositif selon la revendication 1, caractérisé en ce que la pompe aspirante (22, 22') est reliée à une unité de commande disposée à l'extérieur du puits (12, 12') pour réguler sa puissance de pompage.

3. Dispositif selon la revendication 1 ou 2, caractérisé en ce que la zone d'aspiration de l'eau (20, 20') est disposée au-dessous ou au-dessus de la zone (21, 21') pour réintroduire de l'eau dans le puits (12, 12').

4. Dispositif selon l'une des revendications 1 à 3, caractérisé en ce que la zone d'aspiration de l'eau (20) et la zone (21) pour la réintroduction de l'eau souterraine sont séparées par une zone de puits (19) exempte d'eau (19) qui est rendue étanche par des parois de séparation (17, 18), et le tube de liaison (25) entre les zones d'aspiration de l'eau et de réintroduction de l'eau (20, 21) traverse cette zone de puits exempte d'eau (19) et les deux parois de séparation (17, 18).

5. Dispositif selon l'une des revendications 1 à 4, caractérisé en ce que dans la zone d'une paroi de séparation (39) ou de la zone de puits exempte d'eau (19) entre les zones d'aspiration d'eau et de réintroduction d'eau (20, 21 ; 20', 21'), la paroi de puits (13, 13') est entourée à l'extérieur par un manchon d'étanchéité (38, 38').

6. Dispositif selon l'une des revendications 1 à 5, caractérisé en ce que l'espace de réception d'eau (26') pour la pompe aspirante (22'), le corps à buses (28') et la zone de nettoyage (33') disposée au-dessus de celui-ci sont disposés dans un élargissement en forme de pot (41) d'un tube de liaison (40) entre les zones d'aspiration d'eau et de réintroduction d'eau (20', 21') dans le puits (12').

7. Dispositif selon la revendication 6, caractérisé en ce que lors de la disposition de la zone d'aspiration d'eau (20') au-dessus de la zone de réintroduction (21') dans le puits (12'), la pompe aspirante (22') est disposée dans l'élargissement en forme de pot (41) du tube de liaison (40).

8. Dispositif selon l'une des revendications 1 à 7, caractérisé par des moyens connus en soi pour aspirer du gaz de nettoyage ou du mélange gazeux et avec des dispositifs de filtration montés en aval des moyens d'aspiration, le dispositif de filtration (123, 128) présentant au moins une liaison (126, 129) au tube d'alimentation en gaz (30') pour les gaz de nettoyage ou les mélanges gazeux pour le recyclage au moins partiel des gaz dans le puits (10).

9. Dispositif selon la revendication 8, caractérisé en ce que le dispositif de filtration (123, 128) est formé au moins de deux étages et en ce qu'une liaison (126) au tube d'alimentation en gaz (30') des gaz de nettoyage ou des mélanges gazeux dans le puits (10) est formée au moins en aval du premier de ces étages en amont d'un clapet d'étranglement (125).

10. Dispositif selon la revendication 8 ou 9, caractérisé en ce que le premier étage de filtration (123) présente des dispositifs pour une filtration grossière et l'autre étage au moins présente des dispositifs pour une filtration fine des gaz de nettoyage et mélanges gazeux aspirés.

11. Dispositif selon l'une des revendications 8 à 10, caractérisé en ce qu'un étage de filtration (128) monté en aval du premier étage (123) présente un réacteur réfrigérant pour piéger les substances de contamination.

12. Dispositif selon l'une des revendications 8 à 11, caractérisé en ce que le mélange de gaz de nettoyage est constitué d'air avec ou sans adjonction de gaz porteurs.

FIG.1

FIG. 2